# EUROPEAN PATENT APPLICATION

(11) **EP 4 682 981 A1**
(43) Date of publication of application: **21.01.2026**
(21) Application number: 24933175.2
(22) Date of filing: 28.06.2024
(51) Int. Cl.: H01M 4/36, C01B 25/45

(54) **POSITIVE ELECTRODE ACTIVE MATERIAL, PREPARATION METHOD THEREFOR, AND BATTERY**

(30) Priority: 31.05.2024 CN 202410705712
(71) Applicant: Beijing Easpring Material Technology Co., Ltd., Beijing 100160 (CN)
(72) Inventor: SHAO, Zongpu, Beijing 100160 (CN); LIU, Yafei, Beijing 100160 (CN); SHI, Lizi, Beijing 100160 (CN); ZHANG, Xuequan, Beijing 100160 (CN); CHEN, Yanbin, Beijing 100160 (CN)
(74) Representative: Nederlandsch Octrooibureau
(86) International application number: PCT/CN2024/102602
(87) International publication number: WO 2025/245954

(57) **Abstract**

Provided are a cathode active material and a preparation method therefor, and a battery. The cathode active material includes: a core including lithium metal phosphate; a first coating layer covering at least part of a surface of the core; and a second coating layer covering at least part of a surface of the first coating layer. An XRD intensity at a 2θ diffraction angle in a range of 35.5° to 35.7° of the cathode active material is S1, an XRD peak intensity at a 2θ diffraction angle in a range of 24.1° to 25.4° of the cathode active material is S2, and S2/S1 is (0.005 to 0.05): 1. An XRD peak intensity at a 2θ diffraction angle in a range of 28.8° to 29.2° of the cathode active material is S3, and S3/S1 is (0.005 to 0.05): 1.

## Description

### CROSS-REFERENCE TO RELATED APPLICATION

This application claims priority to Chinese patent application No. 202410705712.7 filed on May 31, 2024, the entire contents of which are incorporated herein by reference.

### FIELD

The present disclosure relates to the field of battery technologies, and more particularly, to a cathode active material and a preparation method thereof, and a battery.

### BACKGROUND

With the rapid development of the power battery and energy storage battery market represented by electric vehicles and energy storage, people have put forward higher requirements for the energy density, cycle life, and safety performance of existing lithium-ion batteries. The performance of cathode active materials is a key factor affecting the performance of lithium-ion batteries. Among various cathode active material systems, lithium metal phosphate, as a representative cathode active material, has received extensive attention. For example, lithium iron phosphate has theoretical specific capacity of 170 mAh/g, an operating voltage platform of 3.4 V, and a corresponding theoretical specific energy of only 578 Wh/kg, which fail to meet increasing requirements for the battery energy density in the future power and energy storage market. The theoretical specific capacity and operating voltage platform of the cathode active materials can be improved by adding doping elements and other methods. However, there are problems such as poor capacity utilization and poor cycle performance. Therefore, it is urgent to further improve the current cathode active materials.

### SUMMARY

In a first aspect of the present disclosure, the present disclosure provides a cathode active material. The cathode active material includes a core including lithium metal phosphate; a first coating layer covering at least part of a surface of the core; and a second coating layer covering at least part of a surface of the first coating layer. An X-Ray Diffraction (XRD) peak intensity at a 2θ diffraction angle in a range of 35.5° to 35.7° of the cathode active material is S1, an XRD peak intensity at a 2θ diffraction angle in a range of 24.1° to 25.4° of the cathode active material is S2, and S2/S1 is (0.005 to 0.05): 1. An XRD peak intensity at a 2θ diffraction angle in a range of 28.8° to 29.2° of the cathode active material is S3, and S3/S1 is (0.005 to 0.05): 1. In this way, the cathode active material has high gram capacity, excellent ionic and electronic conductivity, and excellent structural stability.

In some embodiments, S2/S1 is (0.01 to 0.03): 1, and/or S3/S1 is (0.01 to 0.02): 1.

In some embodiments, the first coating layer includes a hexagonal fast ion conductor; and/or the second coating layer includes an orthorhombic fast ion conductor and a carbon material. In this way, the rate capability of the cathode active material can be improved.

In some embodiments, the lithium metal phosphate satisfies a general formula of Li₁₊ₐFeₓG_{y}M_{1-x-y}PO₄C_{z}, where: -0.2≤a≤0.2, 0<x<1, 0≤y≤0.05, 0≤z≤0.1; M includes at least one of Mn, Co, V, or Ni; and G includes at least one of Ga, Sn, V, Mo, Al, Mg, Ce, Ti, Zr, Nb, Si, W, or In. In this way, the cathode active material has high operating voltage platform and gram capacity.

In some embodiments, the hexagonal fast ion conductor satisfies a general formula of Li_{b}M¹_{d}M²ₑM³ᵤ(PO₄)_{w1}(ROᵥ)_{w2}, where: M¹ includes at least one of Mg, Na, or K; M² includes at least one of Al, Ga, In, Y, or Sc; M³ includes at least one of Ti, Zr, or Ge; R includes at least one of Si, Cl, Br, S, Sb, Sn, F, or P; and 0≤b<3, 0≤d≤0.1, 0≤e≤1, 0≤u≤1, 1≤w1≤3, 0≤v≤4, and 0≤w2≤0.5. In this way, the first coating layer can effectively reduce the ion transfer impedance of the core at an interface.

In some embodiments, the orthorhombic fast ion conductor satisfies a general formula of Li₃M⁴ₜTi₂₋ₜ(PO₄)₃, where: M⁴ includes at least one of Al, Ga, In, Y, or Sc; and 0≤t≤1. In this way, the second coating layer has functions of stabilizing the structure of the cathode active material and inhibiting dissolution of transition metals.

In some embodiments, a mass fraction of carbon in the lithium metal phosphate ranges from 0.5% to 3%, and/or a mass fraction of carbon in the second coating layer ranges from 1% to 5%. In this way, the cathode active material has excellent electronic conductivity.

In some embodiments, a mass fraction of carbon in the cathode active material ranges from 1% to 4%. In this way, the cathode active material has high gram capacity.

In a second aspect of the present disclosure, the present disclosure provides a method for preparing the above-described cathode active material. The method includes: mixing a first lithium source, a first metal source, and a first phosphorus source to obtain a first slurry, and performing a first sintering treatment on the first slurry in an inactive atmosphere to obtain a core; mixing a second lithium source, a second metal source, and a second phosphorus source to obtain a second slurry, and performing a second sintering treatment on the second slurry in an oxygen-containing atmosphere to obtain powder of a first coating layer; and mixing the core and the powder of the first coating layer uniformly, mixing the mixture with a third lithium source, a titanium source, a third phosphorus source, and a second carbon source to obtain a third slurry, and performing a third sintering treatment on the third slurry in the inactive atmosphere to obtain the cathode active material. In this way, a preparation process of the cathode active material is simple, a preparation procedure is easy to stably control, and the production cost is low.

In some embodiments, the first slurry satisfies at least one of the following conditions: the first lithium source includes at least one of lithium carbonate, lithium hydroxide, or lithium nitrate; the first metal source includes at least one of an iron source, an M source, or a G source, the iron source including at least one of iron phosphate, iron nitrate, or ferrous nitrate, the M source including at least one of phosphate of element M, nitrate of element M, carbonate of element M, or oxide of element M, and the G source including at least one of nitrate of element G, carbonate of element G, and oxide of element G; the first phosphorus source includes at least one of iron phosphate, ferromanganese phosphate, phosphoric acid, metaphosphoric acid, pyrophosphoric acid, ammonium dihydrogen phosphate, diammonium hydrogen phosphate, or phosphorus oxide; and the first slurry further includes at least one of a first carbon source, the first carbon source comprising at least one of glucose, sucrose, starch, graphene, or carbon nanotubes. In this way, the core can be obtained by a relatively simple method.

In some embodiments, the second slurry satisfies at least one of the following conditions: the second lithium source includes at least one of lithium carbonate or lithium hydroxide; the second phosphorus source includes at least one of phosphoric acid, metaphosphoric acid, pyrophosphoric acid, ammonium dihydrogen phosphate, diammonium hydrogen phosphate, or phosphorus oxide; the second metal source includes at least one of a M¹ source, a M² source, or a M³ source, the M¹ source including at least one of oxide of element M¹, hydroxide of element M¹, nitrate of element M¹, oxalate of element M¹, organic alkoxide of element M¹, or carbonate of element M¹, the M² source including at least one of oxide of element M², hydroxide of element M², nitrate of element M², oxalate of element M², organic alkoxide of element M², or carbonate of element M², and the M³ source including at least one of oxide of element M³, hydroxide of element M³, nitrate, oxalate of element M³, organic alkoxide of element M³, or carbonate of element M³; and the second slurry further includes an R source, the R source including at least one of elemental R, acid of element R, or oxide of element R. In this way, the first coating layer can be obtained by a relatively simple method.

In some embodiments, the third slurry satisfies at least one of the following conditions: the third lithium source includes at least one of lithium carbonate or lithium hydroxide; the titanium source includes at least one of oxide of element titanium, hydroxide of element titanium, nitrate of element titanium, oxalate of element titanium, organic alkoxide of element titanium, or carbonate of element titanium; the third phosphorus source includes at least one of phosphoric acid, metaphosphoric acid, pyrophosphoric acid, ammonium dihydrogen phosphate, diammonium hydrogen phosphate, or phosphorus oxide; the second carbon source includes at least one of glucose, sucrose, starch, graphite, carbon nanotubes, or graphene; and the third slurry further includes a M⁴ source, the M⁴ source including at least one of oxide of element M⁴, hydroxide of element M⁴, nitrate of element M⁴, oxalate of element M⁴, organic alkoxide of element M⁴, or carbonate of element M⁴. In this way, the cathode active material can be obtained by a relatively simple method.

In some embodiments, a temperature of the first sintering treatment ranges from 600°C to 800°C, and a duration of the first sintering treatment ranges from 6 hours to 12 hours; and/or a temperature of the second sintering treatment ranges from 700°C to 900°C, and a duration of the second sintering treatment ranges from 8 hours to 12 hours; and/or a temperature of the third sintering treatment ranges from 300°C to 600°C, and a duration of the third sintering treatment ranges from 6 hours to 12 hours. In this way, the yield of the cathode active material can be improved.

In some embodiments, the first slurry, the second slurry, and the third slurry have each a solid content independently ranging from 10 wt% to 70 wt%; and/or the first slurry has an average particle size smaller than or equal to 500 nm; and/or the second slurry has an average particle size smaller than or equal to 200 nm; and/or the third slurry has an average particle size smaller than or equal to 1 µm; and/or a solvent of each of the first slurry, the second slurry, and the third slurry independently includes at least one of water, isopropanol, ethanol, or ethylene glycol. In this way, the processing performance of the slurry can be improved.

In a third aspect of the present disclosure, the present disclosure provides a battery including a positive electrode plate. The positive electrode plate includes the above-described cathode active material. In this way, the battery has all the characteristics and advantages of the above-described cathode active material and preparation method, which are thus not described in detail herein.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a schematic structural diagram of a cathode active material according to an embodiment of the present disclosure.
FIG. 2 is a schematic flowchart of preparing a cathode active material according to an embodiment of the present disclosure.
FIG. 3 is another schematic flowchart of preparing a cathode active material according to an embodiment of the present disclosure.
FIG. 4 is an X-Ray Diffraction (XRD) spectrum at a 2θ of 10° to 80° of the cathode active material in Example 1 and Comparative Example 1.
FIG. 5 is an XRD spectrum at a 2θ of 23° to 37° of the cathode active material in Example 1 and Comparative Example 1.

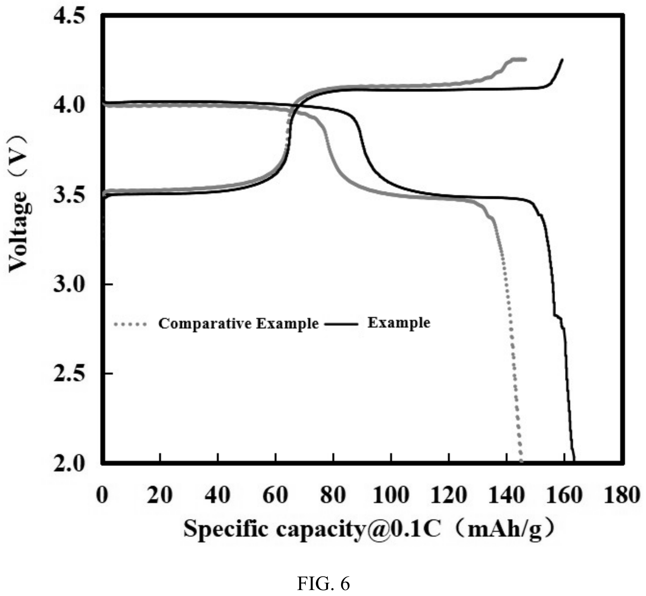

FIG. 6 is a graph of charge and discharge curves of the batteries in Example 1 and Comparative Example 1.

Reference numerals of the accompanying drawings: Core 100; first coating layer 210; second coating layer 220.

### DETAILED DESCRIPTION

Embodiments of the present disclosure are described in detail below. Examples of the embodiments are shown in the drawings, but unnecessary detailed descriptions may be omitted. For example, detailed descriptions of well-known matters and repeated descriptions of actually identical structures may be omitted. This is to avoid the following description from becoming unnecessarily lengthy and to facilitate understanding by those skilled in the art. In addition, the drawings and the following description are provided for those skilled in the art to fully understand the present disclosure and are not intended to limit the subject matter described in the claims.

Unless otherwise defined, all technical and scientific terms used in the present disclosure have the same meaning as commonly understood by those skilled in the art of the present disclosure. Terms in the present disclosure herein are only used for the purpose of describing specific embodiments, and are not intended to limit the present disclosure. Unless otherwise specified, the numerical values of the parameters mentioned in the present disclosure can be measured using various measurement methods commonly used in the art (for example, they can be tested according to the methods given in the embodiments of the present disclosure).

Terms "comprise", "include", and "have" and any variations thereof in the specification and claims of the present disclosure are open expressions. That is, the contents specified in the present disclosure are included, but other contents are not excluded.

In the description of the present disclosure, whether or not word "about" or "approximately" is used, all the numbers disclosed herein are approximate values. The value of each number may differ by smaller than 10% or a reasonable difference considered by those skilled in the art, such as 1%, 2%, 3%, 4%, or 5%.

In the present disclosure, the writing order of each step does not mean a strict execution order and does not constitute any limitation on the implementation process. The specific execution order of each step should be determined by its function and possible internal logic. Unless otherwise indicated, all steps of the present disclosure can be performed sequentially or randomly, preferably sequentially. For example, the method includes steps (a) and (b), indicating that the method may include steps (a) and (b) that are performed sequentially, or may include steps (b) and (a) that are performed sequentially. For example, the method may also include step (c), indicating that step (c) may be added to the method in any order, for example, the method may include steps (a), (b) and (c), or may include steps (a), (c) and (b), or may include steps (c), (a) and (b), etc.

Unless otherwise indicated, all embodiments and optional embodiments of the present disclosure may be combined with each other to form a new technical solution.

Unless otherwise indicated, all technical features and optional technical features of the present disclosure may be combined with each other to form a new technical solution.

As an example, a cathode active material is lithium metal phosphate. An operating voltage platform and gram capacity of the material can be enhanced by adding doping elements, such as doping manganese in an iron site. However, as a result, the electronic conductivity and ionic conductivity of the material may be excessively low, resulting in poor capacity utilization. In addition, due to the presence of the Jahn-Taylor effect of manganese ions, the cathode active material may have poor structural stability and iron dissolution may occur. Carbon coating at a surface of the cathode active material is unable to effectively solve problems such as the Jahn-Taylor effect caused by the manganese ions and the dissolution of transition metal iron, which results in poor cycle performance of the cathode active material.

In the present disclosure, by optimizing the material composition and phase structure, problems of transition metals of an olivine-type cathode active material in the related art, including low electronic and ionic conductivity as well as easy dissolution, can be effectively solved. Specifically, an X-Ray diffraction peak at a 2θ diffraction angle in a range of 35.5° to 35.7° of the cathode active material is a diffraction peak of an olivine-type core, corresponding to a (311) crystal face of Pnma (62) space group of the olivine-type structure. An X-Ray diffraction peak at a 2θ diffraction angle in a range of 24.1° to 25.4°of the cathode active material is a diffraction peak of a hexagonal fast ion conductor, corresponding to a (113) crystal face of a hexagonal phase. An X-Ray diffraction peak at a 2θ diffraction angle in a range of 28.8° to 29.2° of the cathode active material is a diffraction peak of an orthorhombic fast ion conductor, corresponding to an (024) crystal face of an orthorhombic phase. In this way, the olivine-type core is used to improve the operating voltage platform of the cathode active material and thus to improve energy density utilization. By constructing a protective layer of fast ion conductor on a surface of the core, the core can be effectively protected from exposing to the electrolyte during charging and discharging. The protective layer has functions of stabilizing the structure and preventing the dissolution of transition metals, significantly improving the cycle performance and safety performance of the cathode active material. Further, an X-ray diffraction characteristic peak intensity ratio between the core and a coating layer can reflect a content ratio between the core and the coating layer. When S2/S1 is (0.005 to 0.05): 1 and S3/S1 is (0.005 to 0.05): 1, a first coating layer and a second coating layer improve the ionic and electronic conductivity of the cathode active material and inhibit the dissolution of transition metals in the cathode active material, while the coating layer takes a small proportion in the cathode active material, having insignificant effect on the gram capacity of the cathode active material, facilitating to full utilization of the high capacity of the core.

The (113) crystal face of hexagonal phase is the strongest peak in the X-Ray diffraction peak of the first coating layer, and does not overlap with the X-Ray diffraction peaks of the core and the second coating layer.

The (024) crystal face of orthorhombic phase is the third strongest peak in the X-ray diffraction peak of the second coating layer, with a standard peak intensity that is 50% of the strongest peak, and does not overlap with the X-ray diffraction peaks of the core and the first coating layer.

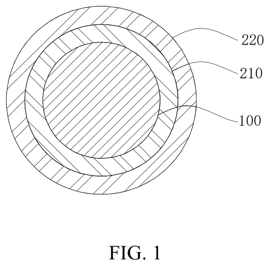

In a first aspect of the present disclosure, the present disclosure provides a cathode active material. Referring to FIG. 1, the cathode active material includes a core 100, a first coating layer 210, and a second coating layer 220. The core 100 includes lithium metal phosphate. The first coating layer 210 covers at least part of a surface of the core 100. The second coating layer 220 covers at least part of a surface of the first coating layer 210. An XRD peak intensity at a 2θ diffraction angle in a range of 35.5° to 35.7° of the cathode active material is S1, and an XRD peak intensity at a 2θ diffraction angle in a range of 24.1° to 25.4° of the cathode active material is S2. S2/S1 is (0.005 to 0.05): 1. An XRD peak intensity at a 2θ diffraction angle in a range of 28.8° to 29.2° of the cathode active material is S3, and S3/S1 is (0.005 to 0.05): 1. In this way, the cathode active material has high gram capacity, excellent ionic and electronic conductivity, and excellent structural stability. Thus, a battery using the cathode active material can have enhanced rate capability and cycle performance.

As an example, S2/S1 may be 0.005: 1, 0.01: 1, 0.015: 1, 0.02: 1, 0.025: 1, 0.03: 1, 0.035: 1, 0.04: 1, 0.045: 1, or 0.05: 1.

As an example, S3/S1 may be 0.005: 1, 0.01: 1, 0.015: 1, 0.02: 1, 0.025: 1, 0.03: 1, 0.035: 1, 0.04: 1, 0.045: 1, or 0.05: 1.

In some embodiments, S2/S1 is (0.01 to 0.03): 1, and/or S3/S1 is (0.01 to 0.02): 1.

In some embodiments, the first coating layer 210 includes a hexagonal fast ion conductor.

The first coating layer 210 is a solid electrolyte with a structure similar to that of an Na Superionic Conductor (NASICON). The first coating layer with a hexagonal phase structure has higher ionic conductivity and can effectively reduce ion transfer impedance of the olivine-type core at an interface.

In some embodiments, the cathode active material also has an X-ray diffraction peak corresponding to the hexagonal fast ion conductor at a 2θ diffraction angle in a range of 20.8° to 21.0°, which corresponds to a (104) crystal face of the hexagonal phase.

In some embodiments, the second coating layer 220 includes an orthorhombic fast ion conductor and a carbon material.

The second coating layer 220 includes a solid electrolyte with a structure similar to that of the NASICON and a graphitized carbon material. The second coating layer can inhibit direct exposure of the core 100 in an electrolyte during charging and discharging and has functions of stabilizing a structure and preventing the dissolution of transition metals. Further, the second coating layer also has high electronic conductivity, which effectively reduces the electronic transfer impedance of the coated olivine-type core at the interface, improving the material cycle performance and safety performance.

In some embodiments, the cathode active material has an X-ray diffraction peak corresponding to the orthorhombic fast ion conductor at a 2θ diffraction angle in a range of 19.6° to 19.8°, which corresponds to a (104) crystal face of an orthorhombic phase.

In some embodiments, a mass ratio of the first coating layer 210 to the core 100 is (1 to 3): 100.

The core 100 is an olivine-type material with high voltage and high capacity. An appropriate amount of the first coating layer can improve the ionic conductivity of the cathode active material, but the first coating layer is unable to provide capacity. When the mass ratio of the first coating layer to the core is within the above-described range, the first coating layer 210 can improve the ionic conductivity of the cathode active material and have small influence on the gram capacity of the cathode active material.

In some embodiments, a mass ratio of the second coating layer 220 to the core 100 is (2 to 4): 100. In this way, the second coating layer 220 can improve the electronic conductivity of the cathode active material, inhibit the dissolution of transition metals in the cathode active material, and have small influence on the gram capacity of the cathode active material.

The core 100 is the olivine-type material with high voltage and high capacity. An appropriate amount of the second coating layer can improve the electronic ion conductivity of the cathode active material and reduce the occurrence of side reactions between the core and the electrolyte. However, the second coating layer is unable to provide capacity. Therefore, when the mass ratio of the second coating layer to the core is within the above-described range, the second coating layer 220 can improve the electronic conductivity of the cathode active material, reduce the occurrence of side reactions, and has small influence on the gram capacity of the cathode active material.

In some embodiments, the lithium metal phosphate satisfies a general formula of Li₁₊ₐFeₓG_{y}M_{1-x-y}PO₄C_{z}, where: -0.2≤a≤0.2, 0<x<1, 0≤y≤0.05, 0≤z≤0.1; M includes at least one of Mn, Co, V, or Ni; and G includes at least one of Ga, Sn, V, Mo, Al, Mg, Ce, Ti, Zr, Nb, Si, W, or In. In this way, the cathode active material has high operating voltage platform and gram capacity.

In some embodiments, -0.2≤a≤0.2, 0<x<1, 0.001≤y≤0.05, and 0.001≤z≤0.1

By multi-directional element doping for lithium iron phosphate, the electronic conductivity of the lithium iron phosphate can be effectively improved. In this way, the core has a stable polyanion framework structure, which exhibits excellent cycle stability. Also, the core has a voltage platform significantly higher than 3.4V during charging and discharging, and the theoretical specific capacity is significantly improved compared with lithium iron phosphate.

In some embodiments, a carbon source may be added during a preparation process of the lithium metal phosphate to construct electron channels at a grain boundary of the core, improving the electronic conductivity of the core. Therefore, the lithium metal phosphate core contains carbon elements.

The charging and discharging of the battery may be accompanied with the deintercalation and consumption of Li and the replenishment of lithium, and a molar content of Li is different when the battery is discharged to different states. In the enumeration of the core in the present disclosure, the molar content of Li is an initial state of the material, that is, a state before feeding. When the cathode active material is applied to a battery system after a charging and discharging cycle, the molar content of Li changes.

In some embodiments, the hexagonal fast ion conductor satisfies a general formula of Li_{b}M¹aM²ₑM³ᵤ(PO₄)_{w1}(ROᵥ)_{w2}, where: M¹ includes at least one of Mg, Na, or K; M² includes at least one of Al, Ga, In, Y, or Sc; M³ includes at least one of Ti, Zr, or Ge; R includes at least one of Si, Cl, Br, S, Sb, Sn, F, or P; and 0≤b<3, 0≤d≤0.1, 0≤e≤1, 0≤u≤1, 1≤w1≤3, 0≤v≤4, and 0≤w2≤0.5. In this way, the first coating layer 210 can effectively reduce the ion transfer impedance of the core 100 at an interface.

In some embodiments, 0.001≤b<3, 0.001≤d≤0.1, 0.001≤e≤1, 0.001≤u≤1, 1≤w1≤3, 0.001≤v≤4, and 0.001≤w2≤0.5

When the hexagonal fast ion conductor in the first coating layer 210 satisfies the above-described conditions, the first coating layer can stabilize a material interface structure of a core 100, allowing the core to have a capacity retention rate close to that of the lithium iron phosphate. Further, since the first coating layer is a solid electrolyte with high ionic conductivity, the coated olivine-type core has low ion transfer impedance at the interface and has excellent rate capability.

As an example, due to the oxidizability of the core 100, when the hexagonal fast ion conductor contains titanium ions with a valence of +4, a hexagonal phase coating layer is less likely to be oxidized after contacting the core. Thus, the first coating layer has high structural stability.

In some embodiments, the orthorhombic fast ion conductor satisfies a general formula of Li₃M⁴ₜTi₂₋ₜ(PO₄)₃, where: M⁴ includes at least one of Al, Ga, In, Y, or Sc; and 0≤t≤1, and preferably, 0.001≤t≤1. In this way, the second coating layer 220 has functions of stabilizing a structure of the cathode active material and inhibiting the dissolution of transition metals.

When the orthorhombic fast ionic conductor in the second coating layer 220 satisfies the above-described conditions, the second coating layer can stabilize the material interface structure of the core 100, allowing the core to have the capacity retention rate close to that of the lithium iron phosphate. Furthermore, the above-described orthorhombic fast ions have higher electronic conductivity after combining with the graphitized carbon material, in such a manner that the coated olivine-type core has low electron transfer impedance at the interface. In this way, the first coating layer and the second coating layer achieve the coating of an ions-electrons mixed conductor of the core, which enables the cathode active material to have better rate capability.

As an example, due to the reducibility of the electrolyte and the oxidizability of the core 100, when the core is in direct contact with the electrolyte, side reactions may occur, thereby resulting in adverse effects such as the dissolution of metal elements in the core. When the second coating layer 220 contains titanium ions with a valence of +3, the second coating layer is less likely to be reduced after contacting the electrolyte, improving the chemical stability between the cathode active material and the electrolyte, and inhibiting the dissolution of transition metal elements in the core 100 due to reduction by the electrolyte.

As an example, when the orthorhombic fast ion conductor includes Li₃Ti₂(PO₄)₃, during charging and discharging between 2.0V and 4.25V, the cathode active material has a discharge platform at 2.8 V corresponding to the orthorhombic phase Li₃Ti₂(PO₄)₃ in addition to two discharge platforms at 4.0V and 3.5V.

In some embodiments, a mass fraction of carbon in the lithium metal phosphate ranges from 0.5% to 3%.

When the mass fraction of carbon in the lithium metal phosphate is within the above-described range, the grain boundary and surface of the core can be carbon-coated by adding the carbon source during the preparation process of the lithium metal phosphate, to construct three-dimensional electronic conductive channels, improving the electronic conductivity of the core.

In some embodiments, a mass fraction of carbon in the second coating layer 220 ranges from 1% to 5%.

When the mass fraction of carbon in the second coating layer is within the above-described range, three-dimensional electronic conductive channels are constructed by coating carbon on the core and the grain boundary and surface of the first coating layer, improving the electronic conductivity of the cathode active material.

In some embodiments, a mass fraction of carbon in the cathode active material ranges from 1% to 4%. In this way, the cathode active material has a high gram capacity.

When the mass fraction of carbon in the cathode active material is within the above range, the appropriate amount of carbon elements can not only construct the three-dimensional electronic conductive channels to improve the electronic conductivity of the cathode active material, but also have small influence on the gram capacity of the cathode active material, thereby improving the discharge capacity and rate capability of the cathode active material.

In some embodiments, an average particle size Dv50 of the cathode active material may range from 0.5 µm to 20 µm. As an example, the average particle size Dv50 of the cathode active material and the core may be measured using a laser particle size analyzer.

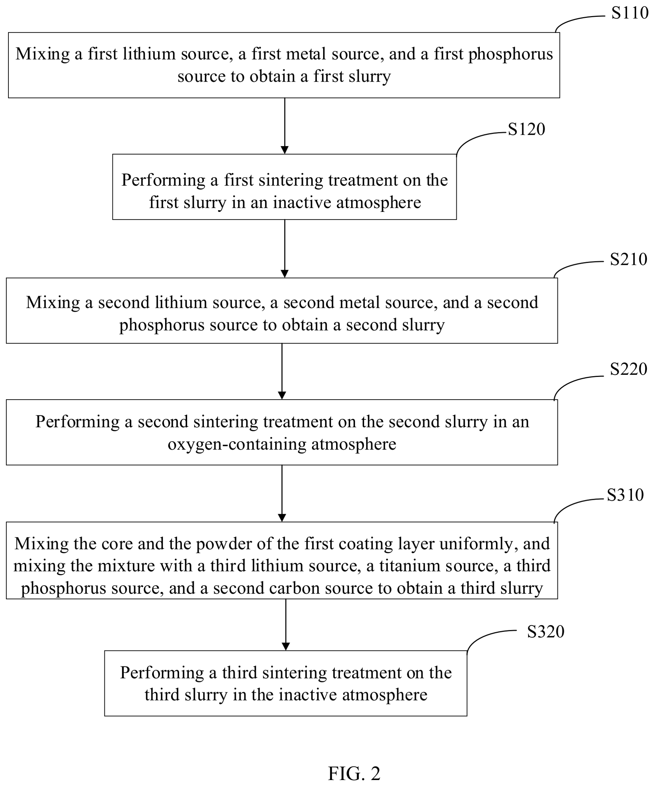

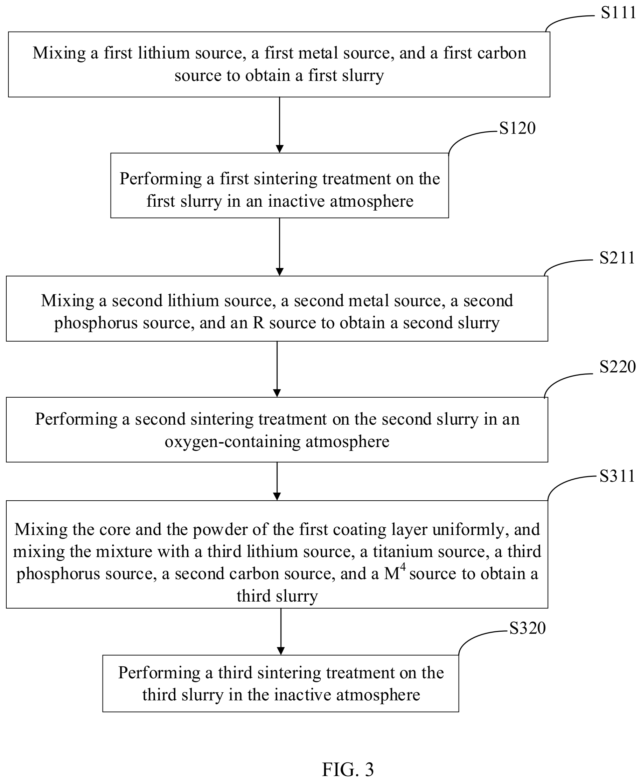

In a second aspect of the present disclosure, the present disclosure provides a method for preparing the above-described cathode active material. The method has the advantages of simple process, easy and stable control of preparation process, simple introduction of doping elements and electron transmission channels, remarkable improvement effect on performance, and low production cost. Specifically, referring to FIG. 2 and FIG. 3, the method for preparing the cathode active material includes the following operations.

At S110, a first lithium source, a first metal source, and a first phosphorus source are mixed to obtain a first slurry.

In some embodiments, in this operation, the first lithium source, the first metal source, the first phosphorus source, and a solvent are mixed to obtain the first slurry. In this way, a sintering treatment is performed on the first slurry to obtain a core material.

In some embodiments, the first lithium source includes at least one of lithium carbonate, lithium hydroxide, or lithium nitrate.

In some embodiments, the first metal source includes at least one of an iron source, an M source, or a G source. The iron source includes at least one of iron phosphate, iron nitrate, or ferrous nitrate, the M source includes at least one of phosphate of element M, nitrate of element M, carbonate of element M, or oxide of element M. The G source includes at least one of nitrate of element G, carbonate of element G, and oxide of element G.

In some embodiments, the first phosphorus source includes at least one of iron phosphate, ferromanganese phosphate, phosphoric acid, metaphosphoric acid, pyrophosphoric acid, ammonium dihydrogen phosphate, diammonium hydrogen phosphate, or phosphorus oxide.

In some embodiments, referring to S111 in FIG. 3, in this operation, the first lithium source, the first metal source, the first phosphorus source, a first carbon source, and the solvent are mixed to obtain the first slurry. In this way, the core material can be obtained by performing the sintering treatment on the first slurry. Specifically, the first carbon source may include at least one of glucose, sucrose, starch, graphene, or carbon nanotubes. By adding the first carbon source, electron channels can be constructed in a grain boundary of the core, improving the electronic conductivity of the core.

In some embodiments, the first slurry has a solid content ranging from 10 wt% to 70 wt%.

In some embodiments, the first slurry has an average particle size smaller than or equal to 500 nm. For example, the average particle size of the first slurry may range from 5 nm to100 nm, from 10 nm to 200 nm, from 50 nm to 500 nm, etc.

In some embodiments, a solvent of the first slurry includes at least one of water, isopropanol, ethanol, or ethylene glycol.

It should be understood that, during a first sintering treatment process, a part of the first carbon source may be consumed, and volatile substances such as carbon dioxide may be generated. Therefore, the amount of the first carbon source added to the first slurry may be greater than a design value in a finished product.

At S120, a first sintering treatment is performed on the first slurry in an inactive atmosphere.

In some embodiments, in this operation, a drying treatment is performed on the first slurry, and the first sintering treatment is performed on the first slurry in the inactive atmosphere to obtain an olivine-type core.

In some embodiments, a temperature of the first sintering treatment ranges from 600°C to 800°C, and a duration of the first sintering treatment ranges from 6 hours to 12 hours.

When the temperature and duration of the first sintering treatment are within the above-described ranges, it is conducive to the formation of the olivine-type core with high phase structural stability and fewer impurity phases, and the formed core particles have a moderate particle size.

In some embodiments, the inactive atmosphere includes nitrogen and/or argon.

In some embodiments, conditions of the drying treatment are: a drying temperature ranges from 80°C to 400°C, for example, the drying temperature may range from 100°C to 300°C, and a drying duration ranges from 0.1 hours to 10 hours, for example, the drying duration may range from 0.5 hours to 3 hours. Further, the drying treatment includes at least one of a spray dryer, a fluidized bed dryer, a belt dryer, a flash dryer, and a disc nest mill.

At S210, a second lithium source, a second metal source, and a second phosphorus source are mixed to obtain a second slurry.

In some embodiments, raw materials used to form the first coating layer are mixed with the solvent to obtain the second slurry. Specifically, the second slurry is obtained by mixing the second lithium source, the second metal source, and the second phosphorus source. In this way, the sintering treatment is performed on the second slurry to obtain a powder material of the first coating layer.

In some embodiments, the second lithium source includes at least one of lithium carbonate or lithium hydroxide.

In some embodiments, the second phosphorus source includes at least one of phosphoric acid, metaphosphoric acid, pyrophosphoric acid, ammonium dihydrogen phosphate, diammonium hydrogen phosphate, or phosphorus oxide.

In some embodiments, the second metal source includes at least one of a M¹ source, a M² source, or a M³ source. The M¹ source includes at least one of oxide of element M¹, hydroxide of element M¹, nitrate of element M¹, oxalate of element M¹, organic alkoxide of element M¹, or carbonate of element M¹. The M² source includes at least one of oxide of element M², hydroxide of element M², nitrate of element M², oxalate of element M², organic alkoxide of element M², or carbonate of element M². The M³ source includes at least one of oxide of element M³, hydroxide of element M³, nitrate, oxalate of element M³, organic alkoxide of element M³, or carbonate of element M³.

In some embodiments, referring to S211 in the FIG. 3, in this operation, the second lithium source, the second metal source, the second phosphorus source, an R source, and the solvent are mixed to obtain the second slurry. The R source includes at least one of elemental R, acid of element R, or oxide of element R.

In some embodiments, the second slurry has a solid content ranging from 10 wt% to 70 wt%.

In some embodiments, the second slurry has an average particle size smaller than or equal to 200 nm. Specifically, the average particle size of the second slurry may range from 5 nm to 100 nm, from 10 nm to 200 nm, etc.

In some embodiments, a solvent of the second slurry includes at least one of water, isopropanol, ethanol, or ethylene glycol.

At S220, a second sintering treatment is performed on the second slurry in an oxygen-containing atmosphere.

In some embodiments, in this operation, a drying treatment is performed on the second slurry, and the second sintering treatment is performed on the second slurry in the oxygen-containing atmosphere, to obtain a micron-sized powder material of the first coating layer. Nanoscale processing is performed on the powder material in the solvent, and a nano-sized hexagonal powder material of the first coating layer is obtained after drying.

In some embodiments, a temperature of the second sintering treatment ranges from 700°C to 900°C, and a duration of the second sintering treatment ranges from 8 hours to 12 hours.

When the temperature and duration of the second sintering treatment are within the above-described ranges, it is conducive to the formation of the hexagonal powder of the first coating layer with high phase structural stability and fewer impurity phases.

In some embodiments, the oxygen-containing atmosphere includes oxygen.

In some embodiments, the conditions of the drying treatment are: the drying temperature ranges from 80°C to 400°C, for example, the drying temperature may range from 100°C to 300°C, and the drying duration ranges from 0.1 hours to 10 hours, for example, the drying duration may range from 0.5 hours to 3 hours. Further, the drying treatment includes at least one of the spray dryer, the fluidized bed dryer, the belt dryer, the flash dryer, and the disc nest mill.

It should be understood that, the preparation of the core and the preparation of the nano-sized powder material of the first coating layer are not in any particular order, as long as the preparation of both of them is completed prior to the formation of the second coating layer, and those skilled in the art can make a choice according to the actual situation.

At S310, the core and the powder of the first coating layer are mixed uniformly, the mixture is then mixed with a third lithium source, a titanium source, a third phosphorus source, and a second carbon source, to obtain a third slurry.

In some embodiments, in this operation, the third slurry is obtained by mixing the olivine-type core and the powder of the first coating layer uniformly and then mixing the mixture with the third lithium source, the titanium source, the third phosphorus source, the second carbon source, and the solvent.

In some embodiments, the third lithium source includes at least one of lithium carbonate or lithium hydroxide.

In some embodiments, the titanium source includes at least one of oxide of element titanium, hydroxide of element titanium, nitrate of element titanium, oxalate of element titanium, organic alkoxide of element titanium, or carbonate of element titanium.

In some embodiments, the third phosphorus source includes at least one of phosphoric acid, metaphosphoric acid, pyrophosphoric acid, ammonium dihydrogen phosphate, diammonium hydrogen phosphate, or phosphorus oxide.

In some embodiments, the second carbon source includes at least one of glucose, sucrose, starch, graphite, carbon nanotubes, or graphene.

By adding the second carbon source, electronic conductive channels can be constructed at a surface of the cathode active material to improve the electronic conductivity of the cathode active material.

In some embodiments, referring to S311 in the FIG. 3, in this operation, the core and the powder of the first coating layer are mixed uniformly, and then the mixture is mixed with the third lithium source, the titanium source, the third phosphorus source, the second carbon source, a M⁴ source, and the solvent, to obtain the third slurry. The M⁴ source includes at least one of oxide of element M⁴, hydroxide of element M⁴, nitrate of element M⁴, oxalate of element M⁴, organic alkoxide of element M⁴, or carbonate of element M⁴.

In some embodiments, the third slurry has a solid content ranging from 10 wt% to 70 wt%.

In some embodiments, the third slurry has an average particle size smaller than or equal to 1 µm. Specifically, the average particle size of the third slurry may range from 5 nm to 100 nm, from 10 nm to 200 nm, from 50 nm to 500 nm, from 200 nm to 1 µm, etc.

In some embodiments, a solvent of the third slurry includes at least one of water, isopropanol, ethanol, or ethylene glycol.

It should be understood that, during a third sintering treatment process, a part of the second carbon source may be consumed, and volatile substances such as carbon dioxide may be generated. Therefore, the amount of the second carbon source added to the third slurry may be greater than the design value in the finished product.

At S320, a third sintering treatment is performed on the third slurry in an inactive atmosphere.

In some embodiments, in this operation, the drying treatment is performed on the third slurry, and the sintering treatment is performed on the third slurry in the inactive atmosphere, to obtain the cathode active material.

In some embodiments, a temperature of the third sintering treatment ranges from 300°C to 600°C, and a duration of the third sintering treatment ranges from 6 hours to 12 hours. In this way, the yield of the cathode active material can be improved.

When the temperature and duration of the third sintering treatment are within the above-described ranges, it is conducive to the formation of the orthorhombic second coating layer with high phase structural stability and fewer impurity phases.

In some embodiments, the inactive atmosphere includes nitrogen and/or argon.

In some embodiments, the conditions of the drying treatment are: the drying temperature ranges from 80°C to 400°C, for example, the drying temperature may range from 100°C to 300°C, and the drying duration ranges from 0.1 hours to 10 hours, for example, the drying duration may range from 0.5 hours to 3 hours. Further, the drying treatment includes at least one of the spray dryer, the fluidized bed dryer, the belt dryer, the flash dryer, and the disc nest mill.

In some embodiments, after the third sintering treatment, a crushing treatment may be performed to obtain the cathode active material with a moderate particle size. The crushing treatment may be performed using equipment including a jet mill, a mechanical mill, and a colloid mill, etc.

In a third aspect of the present disclosure, the present disclosure provides a battery including a positive electrode plate. The positive electrode plate includes the above-described cathode active material. In this way, the battery has all the characteristics and advantages of the above-described cathode active material and preparation method, which are not described in detail herein.

The solutions of the present disclosure are described below by means of specific embodiments. It should be noted that, the following embodiments are only used to illustrate the present disclosure and should not be regarded as limitation on the scope of the present disclosure. The techniques or conditions in the examples without specific indications shall be carried out in accordance with the techniques or conditions described in the literature in the field or in accordance with the product specification. The reagents or instruments without indicating the specific manufacturers are all conventional and commercially available products.

### Example 1

(1) Lithium carbonate, iron phosphate, manganese oxide, phosphoric acid, and glucose were mixed in purified water according to a molar ratio of Li: Fe: Mn: P: C (carbon source) =1.03: 0.3: 0.7: 1: 1.16, and the mixture was subjected to ball milling with zirconium oxide balls for 4 hours in a ball mill to obtain a first slurry having an average particle size smaller than 500 nm. The first slurry was treated with a spray dryer to obtain the powder. The powder was sintered at 700°C for 8 hours in a tube furnace in a nitrogen atmosphere. A sintered material was dissociated and sieved to obtain a core with a composition of

Li_{1.03}Mn_{0.7}Fe_{0.3}PO₄/C_{0.16}.

(2) Lithium carbonate, aluminum oxide, titanium oxide, and ammonium dihydrogen phosphate were mixed in purified water at a molar ratio of Li: Al: Ti: P=1.3: 0.3: 1.7: 3, and the mixture was subjected to ball milling with zirconium oxide balls for 4 hours in the ball mill to obtain a slurry having an average particle size smaller than 500 nm. The slurry was treated with the spray dryer to obtain the powder. The powder was sintered at 700°C for 8 hours in a box-type furnace in an air atmosphere. A sintered material was subjected to ball milling with zirconium oxide balls for 6 hours in the ball mill to obtain a second slurry having an average particle size smaller than 200 nm. The second slurry was treated with the spray dryer to obtain the powder. The powder was dissociated and sieved to obtain the nano-sized powder of a first coating layer with a composition of Li_{1.3}Al_{0.3}Ti_{1.7}(PO₄)₃.

(3) The core obtained in step (1), the nano-sized powder of the first coating layer obtained in step (2), lithium carbonate, titanium oxide, ammonium dihydrogen phosphate, and glucose were mixed in purified water at a molar ratio of Mn: Al: Li: Ti: P: C=70: 0.3: 3: 2: 3: 16. The mixture was subjected to ball milling with zirconium oxide balls for 4 hours in the ball mill to obtain a third slurry having an average particle size smaller than 1 µm. The third slurry was treated with the spray dryer to obtain the powder, and the powder was sintered at 500°C for 6 hours in the nitrogen atmosphere. A sintered material was crushed to obtain a cathode active material, in which the second coating layer was composed of graphitized carbon and Li₃Ti₂(PO₄)₃.

### Example 2

Example 2 was substantially the same as Example 1, but merely differs from Example 1 in that: in step (3), the core obtained in step (1), the nano-sized powder of the first coating layer obtained in step (2), lithium carbonate, titanium oxide, ammonium dihydrogen phosphate, and glucose were mixed in purified water according to a molar ratio of Mn: Al: Li: Ti: P: C=70: 1.5: 15: 10: 15: 16.

### Example 3

Example 3 was substantially the same as Example 1, but merely differs from Example 1 in that: in step (3), the core obtained in step (1), the nano-sized powder of the first coating layer obtained in step (2), lithium carbonate, titanium oxide, ammonium dihydrogen phosphate, and glucose were mixed in purified water according to a molar ratio of Mn: Al: Li: Ti: P: C=70: 0.3: 15: 10: 15: 16.

### Example 4

Example 4 was substantially the same as Example 1, but merely differs from Example 1 in the following aspects. In step (1), lithium carbonate, titanium oxide, iron phosphate, manganese oxide, phosphoric acid, and glucose were mixed in purified water according to a molar ratio of Li: Ti: Fe: Mn: P: C (carbon source) =1.03: 0.01: 0.3: 0.699: 1: 1.16, and the mixture was subjected to ball milling with zirconium oxide balls for 4 hours in the ball mill to obtain a first slurry having an average particle size smaller than 500 nm. The first slurry was treated with the spray dryer to obtain the powder, and the powder is sintered at 700°C for 8 hours in the tubular furnace in the nitrogen atmosphere. A sintered material was dissociated and sieved to obtain a core having a composition of Li_{1.03}Mn_{0.699}Ti_{0.01}Fe_{0.3}PO₄/C_{0.16}.

### Example 5

Example 5 was substantially the same as Example 1, but merely differs from Example 1 in the following aspects. In step (2), lithium carbonate, aluminum oxide, titanium oxide, ammonium dihydrogen phosphate, and silicic acid were mixed in purified water according to a molar ratio of Li: Al: Ti: P: Si=1.3: 0.3: 1.7: 2.98: 0.03, and the mixture was subjected to ball milling with zirconium oxide balls for 4 hours in the ball mill to obtain a slurry having an average particle size smaller than 500 nm. The slurry was treated with the spray dryer to obtain the powder. The powder was sintered at 700°C for 8 hours in the box-type furnace in the air atmosphere. A sintered material was subjected to ball milling with zirconium oxide balls for 6 hours in the ball mill to obtain a second slurry having an average particle size smaller than 200 nm. The second slurry was treated with the spray dryer to obtain the powder. The powder was dissociated and sieved to obtain a nano-sized powder of a first coating layer having a composition of Li_{1.3}Al_{0.3}Ti_{1.7}(PO₄)_{2.98}(SiO₃)_{0.03}.

### Example 6

Example 6 was substantially the same as Example 1, but merely differs from Example 1 in the following aspects. In step (3), the core obtained in step (1), the nano-sized powder of the first coating layer obtained in step (2), lithium carbonate, yttrium oxide, titanium oxide, ammonium dihydrogen phosphate, and glucose were mixed in purified water according to a molar ratio of Mn: Al: Li: Y: Ti: P: C=70: 0.3: 3: 0.01: 1.99: 3: 16, and the mixture was subjected to ball milling with zirconium oxide balls for 4 hours in the ball mill to obtain a third slurry having an average particle size smaller than 1 µm. The third slurry was treated with the spray dryer to obtain the powder, and the powder was sintered at 500°C for 6 hours in the nitrogen atmosphere. A sintered material was crushed to obtain a cathode active material, in which the second coating layer was composed of graphitized carbon and Li₃Y_{0.01}Ti_{1.99}(PO₄)₃.

### Comparative Example 1

Comparative Example 1 was substantially the same as Example 1, but merely differs from Example 1 in that the first coating layer and the second coating layer were not provided.

### Comparative Example 2

Comparative Example 2 was substantially the same as Example 1, but merely differs from Example 1 in that the second coating layer was not provided. Specifically, for the third slurry, only the core obtained in step (1) and the nano-sized powder of the first coating layer obtained in step (2) were mixed in purified water according to a molar ratio of Mn: Al=70: 0.3 to form a slurry. The slurry was treated with the spray dryer to obtain the powder, and the powder was dissociated and sieved to obtain the nano-sized powder of the first coating layer having a composition of Li_{1.3}Al_{0.3}Ti_{1.7}(PO₄)₃.

### Comparative Example 3

Comparative Example 3 was substantially the same as Example 1, but merely differs from Example 1 in that the first coating layer was not provided. Specifically, the nano-sized powder of the first coating layer was not added to the third slurry.

### Comparative Example 4

Comparative Example 4 was substantially the same as Example 1, but merely differs from Example 1 in that: in the third slurry, only the core obtained in step (1), the nano-sized powder of the first coating layer obtained in step (2), and glucose were mixed in purified water according to a molar ratio of Mn: Al: C (carbon source) =70: 0.3: 16.

The compositions of the cathode active materials in the above-described examples and comparative examples are specifically shown in Table 1.

**[Table 1]**

| Number | Core | First coating layer | Second coating layer |
|---|---|---|---|
| Example1 | Li_{1.03}Mn_{0.7}Fe_{0.3}PO₄/C_{0.16} | Li_{1.3}Al_{0.3}Ti_{1.7}(PO₄)₃ | Graphitized carbon and Li₃Ti₂(PO₄)₃ |
| Example 2 | Li_{1.03}Mn_{0.7}Fe_{0.3}PO₄/C_{0.16} | Li_{1.3}Al_{0.3}Ti_{1.7}(PO₄)₃ | Graphitized carbon and Li₃Ti₂(PO₄)₃ |
| Example 3 | Li_{1.03}Mn_{0.7}Fe_{0.3}PO₄/C_{0.16} | Li_{1.3}Al_{0.3}Ti_{1.7}(PO₄)₃ | Graphitized carbon and Li₃Ti₂(PO₄)₃ |
| Example 4 | Li_{1.03}Mn_{0.699}Ti_{0.01}Fe_{0.3}PO₄/C_{0.16} | Li_{1.3}Al_{0.3}Ti_{1.7}(PO₄)₃ | Graphitized carbon and Li₃Ti₂(PO₄)₃ |
| Example 5 | Li_{1.03}Mn_{0.7}Fe_{0.3}PO₄/C_{0.16} | Li_{1.3}Al_{0.3}Ti_{1.7}(PO₄)_{2.98}(SiO₃)_{0.03} | Graphitized carbon and Li₃Ti₂(PO₄)₃ |
| Example 6 | Li_{1.03}Mn_{0.7}Fe_{0.3}PO₄/C_{0.16} | Li_{1.3}Al_{0.3}Ti_{1.7}(PO₄)₃ | Graphitized carbon and Li₃Y_{0.01}Ti_{1.99}(PO₄)₃ |
| Comparative Example 1 | Li_{1.03}Mn_{0.7}Fe_{0.3}PO₄/C_{0.16} | None | None |
| Comparative Example 2 | Li_{1.03}Mn_{0.7}Fe_{0.3}PO₄/C_{0.16} | Li_{1.3}Al_{0.3}Ti_{1.7}(PO₄)₃ | None |
| Comparative Example 3 | Li_{1.03}Mn_{0.7}Fe_{0.3}PO₄/C_{0.16} | None | Graphitized carbon and Li₃Ti₂(PO₄)₃ |
| Comparative Example 4 | Li_{1.03}Mn_{0.7}Fe_{0.3}PO₄/C_{0.16} | Li_{1.3}Al_{0.3}Ti_{1.7}(PO₄)₃ | Graphitized carbon |

The cathode active materials in the above-described examples and comparative examples were assembled into button batteries. Details were as follows.

The cathode active material, acetylene black, and polyvinylidene fluoride (PVDF) were mixed according to a mass ratio of 90: 5: 5, coated on aluminum foil and dried, and stamped into a positive electrode plate having a diameter of 12 mm and a thickness of 120 µm under a pressure of 100 MPa. The positive electrode plate was placed in a vacuum drying box and dried at 120°C for 12 hours. A Li metal sheet having a diameter of 17 mm and a thickness of 1 mm was used as a negative electrode plate. A Celgard 2400 porous membrane having a thickness of 25 µm was used as a separator. 1 mol/L LiPF₆ was used as electrolyte, and a solvent of the electrolyte was a mixture of equal volumes of ethylene carbonate (EC) and diethyl carbonate (DEC). The positive electrode plate, the separator, the negative electrode plate, and the electrolyte were assembled into a 2025-type button battery in an argon glove box with a water content and an oxygen content smaller than 5 ppm.

The button batteries assembled from the cathode active materials in the above-described examples and comparative examples were tested as follows, and test results were shown in Table 2.

Rate capability: at the room temperature, the battery was charged and discharged in a range of 2.5V to 4.3V at a rate of 0.1C and 1C, respectively, and the 0.1C discharge capacity C_{0.1C} and the 1C discharge capacity C_{1C} were compared. The rate capability = C_{1C}/C_{0.1C}×100%.

Cycle performance: at the room temperature, the battery was charged and discharged for 80 cycles at 2.5V to 4.3V and 0.1C, and the first cycle discharge capacity C₀ and the discharge capacity C₁ after 80 cycles were compared. A capacity retention rate = C₁/C₀×100%.

Iron dissolution: measured by ICP method. Specifically, at the room temperature, the battery was charged and discharged for 80 cycles at 2.5V to 4.3V and 1C, and thereafter, the battery was disassembled to remove the separator and the negative electrode plate, which were dissolved in hydrochloric acid and placed in an ICP instrument to test a Fe content.

**[Table 2]**

| Number | S2/S1 | S3/S1 | First cycle discharge capacity /(mAh/g) | Specific capacity after 80 cycles /(mAh/g) | Capacity retention rate /% | Rate capability /% | **Iron** dissolution /ppm |
|---|---|---|---|---|---|---|---|
| Example 1 | 0.01 | 0.01 | 162.8 | 160.2 | 98.4 | 92.5 | 52 |
| Example 2 | 0.05 | 0.05 | 160.2 | 155.8 | 98.5 | 90.3 | 48 |
| Example 3 | 0.01 | 0.05 | 160.8 | 158.2 | 98.4 | 91.6 | 50 |
| Example 4 | 0.01 | 0.01 | 163.1 | 159.8 | 98.0 | 94.0 | 52 |
| Example 5 | 0.01 | 0.01 | 163.4 | 161.3 | 98.7 | 92.5 | 54 |
| Example 6 | 0.01 | 0.01 | 162.8 | 160.2 | 98.4 | 92.8 | 52 |
| Comparative Example 1 | 0 | 0 | 160.7 | 136.5 | 84.9 | 87.5 | 534 |
| Comparative Example 2 | 0.01 | 0 | 161.2 | 138.0 | 85.6 | 87.5 | 298 |
| Comparative Example 3 | 0 | 0.01 | 158.4 | 137.7 | 86.9 | 88.0 | 305 |
| Comparative Example 4 | 0.01 | 0 | 161.7 | 137.9 | 85.3 | 88.0 | 298 |

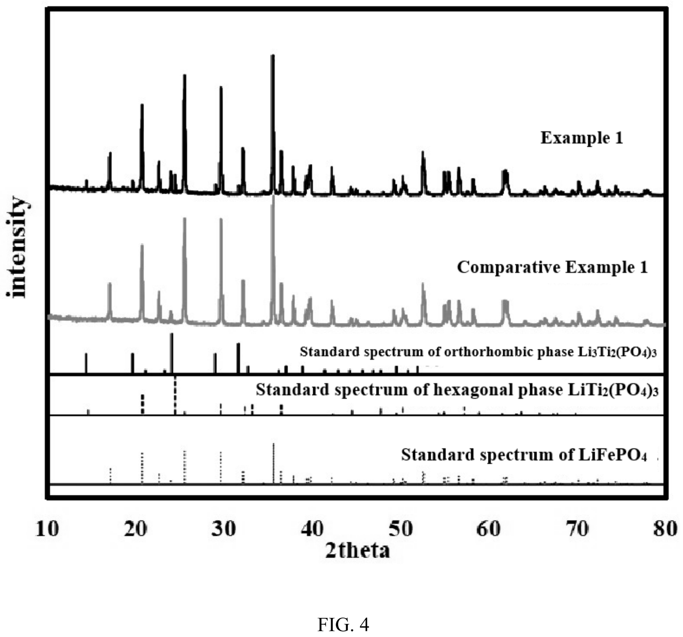

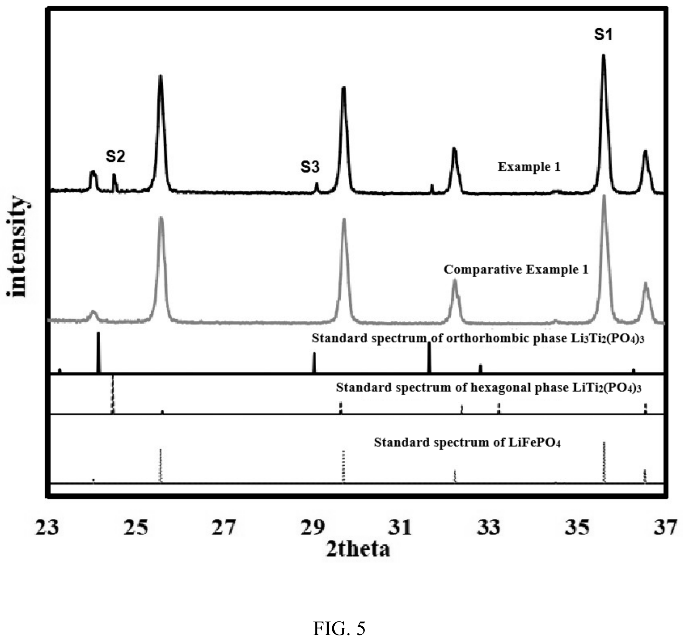

The first cycle charge and discharge curves of the battery in Example 1 and Comparative Example 1 are shown in FIG. 5. XRD test results of the cathode active materials in Example 1 and Comparative Example 1 are shown in FIG. 4 and FIG. 5. FIG. 5 indicates that, in addition to a standard diffraction peak corresponding to LiFePO₄, the cathode active material in Example 1 had a diffraction peak at 2θ=24.5° corresponding to a (113) crystal face of a hexagonal phase of the first coating layer and a diffraction peak near 2θ=29.0° corresponding to a (024) crystal face of an orthorhombic phase of the second coating layer. The cathode active material in Comparative Example 1 has the standard diffraction peak corresponding to LiFePO₄.

The performances of the batteries in Examples 1 to 6 were better than those of the batteries in Comparative Examples 1 to 4. The test results reveal that the first coating layer and the second coating layer can improve the ionic and electronic conductivity of the cathode active material and inhibit the dissolution of transition metals in the cathode active material, and that a proportion of the coating layer in the cathode active material is small, which has small influence on the gram capacity of the cathode active material, facilitating to full utilization of the core with high capacity.

In the present disclosure, terms such as "first" and "second" are used herein for purposes of description and are not intended to indicate or imply relative importance or significance. "First feature" and "second feature" may include one or more this feature.

In the present disclosure, the first feature located on the surface of the second feature may include a direct contact between the first feature and the second feature, or an indirect contact between the first feature and the second feature via another feature.

In the present disclosure, "A and/or B" may include the following situations, i.e., A exists alone, B exists alone, as well as A and B both exist. A and B are only used as examples, and may be any technical features connected by "and/or" in the present disclosure.

It should be noted that the present disclosure is not limited to the above-described embodiments. The above-described embodiments are merely illustrative. The embodiments having substantially the same structures and exerting the same effects as the technical concept within the scope of the technical solution of the present disclosure are all included in the technical scope of the present disclosure. In addition, without departing from the scope of the main concept of the present disclosure, those skilled in the art may think of various modifications to the embodiments and other embodiments constructed by combining some of the constituent elements of the embodiments, which shall also fall within the scope of the present disclosure.

## Claims

1. A cathode active material, comprising:
a core comprising lithium metal phosphate;
a first coating layer covering at least part of a surface of the core; and
a second coating layer covering at least part of a surface of the first coating layer, wherein:
an X-Ray Diffraction, XRD, peak intensity at a 2θ diffraction angle in a range of 35.5° to 35.7° of the cathode active material is S1;
an XRD peak intensity at a 2θ diffraction angle in a range of 24.1° to 25.4° of the cathode active material is S2, S2/S1 being (0.005 to 0.05): 1; and
an XRD peak intensity at a 2θ diffraction angle in a range of 28.8° to 29.2° of the cathode active material is S3, S3/S1 being (0.005 to 0.05): 1.

2. The cathode active material according to claim 1, wherein:
S2/S1 is (0.01 to 0.03): 1; and/or
S3/S1 is (0.01 to 0.02): 1.

3. The cathode active material according to claim 1, wherein:
the first coating layer comprises a hexagonal fast ion conductor; and/or
the second coating layer comprises an orthorhombic fast ion conductor and a carbon material.

4. The cathode active material according to any one of claims 1 to 3, wherein the lithium metal phosphate satisfies a general formula of Li₁₊ₐFeₓG_{y}M_{1-x-y}PO₄/C_{z}, where:
-0.2≤a≤0.2, 0<x<1, 0≤y≤0.05, 0≤z≤0.1;
M comprises at least one of Mn, Co, V, or Ni; and
G comprises at least one of Ga, Sn, V, Mo, Al, Mg, Ce, Ti, Zr, Nb, Si, W, or In.

5. The cathode active material according to claim 3, wherein the hexagonal fast ion conductor satisfies a general formula of Li_{b}M¹_{d}M²M³ᵤ(PO₄)_{wl}(ROᵥ)_{w2}, where:
M¹ comprises at least one of Mg, Na, or K;
M² comprises at least one of Al, Ga, In, Y, or Sc;
M³ comprises at least one of Ti, Zr, or Ge;
R comprises at least one of Si, Cl, Br, S, Sb, Sn, F, or P; and
0≤b<3, 0≤d≤0.1, 0≤e≤1, 0≤u≤1, 1≤w1≤3, 0≤v≤4, and 0≤w2≤0.5.

6. The cathode active material according to claim 3, wherein the orthorhombic fast ion conductor satisfies a general formula of Li₃M⁴ₜTi₂₋ₜ(PO₄)₃, where:
M⁴ comprises at least one of Al, Ga, In, Y, or Sc; and
0≤t≤1.

7. The cathode active material according to claim 3, wherein:
a mass fraction of carbon in the lithium metal phosphate ranges from 0.5% to 3%; and/or
a mass fraction of carbon in the second coating layer ranges from 1% to 5%.

8. The cathode active material according to claim 7, wherein a mass fraction of carbon in the cathode active material ranges from 1% to 4%.

9. A method for preparing the cathode active material according to any one of claims 1 to 8, wherein the method comprises:
mixing a first lithium source, a first metal source, and a first phosphorus source to obtain a first slurry, and performing a first sintering treatment on the first slurry in an inactive atmosphere to obtain a core;
mixing a second lithium source, a second metal source, and a second phosphorus source to obtain a second slurry, and performing a second sintering treatment on the second slurry in an oxygen-containing atmosphere to obtain powder of a first coating layer; and
mixing the core and the powder of the first coating layer uniformly, mixing the mixture with a third lithium source, a titanium source, a third phosphorus source, and a second carbon source to obtain a third slurry, and performing a third sintering treatment on the third slurry in the inactive atmosphere to obtain the cathode active material.

10. The method according to claim 9, wherein the first slurry satisfies at least one of the following conditions:
the first lithium source comprises at least one of lithium carbonate, lithium hydroxide, or lithium nitrate;
the first metal source comprises at least one of an iron source, an M source, or a G source, the iron source comprising at least one of iron phosphate, iron nitrate, or ferrous nitrate, the M source comprising at least one of phosphate of element M, nitrate of element M, carbonate of element M, or oxide of element M, and the G source comprising at least one of nitrate of element G, carbonate of element G, and oxide of element G;
the first phosphorus source comprises at least one of iron phosphate, ferromanganese phosphate, phosphoric acid, metaphosphoric acid, pyrophosphoric acid, ammonium dihydrogen phosphate, diammonium hydrogen phosphate, or phosphorus oxide; and
the first slurry further comprises at least one of a first carbon source, the first carbon source comprising at least one of glucose, sucrose, starch, graphene, or carbon nanotubes.

11. The method according to claim 9, wherein the second slurry satisfies at least one of the following conditions:
the second lithium source comprises at least one of lithium carbonate or lithium hydroxide;
the second phosphorus source comprises at least one of phosphoric acid, metaphosphoric acid, pyrophosphoric acid, ammonium dihydrogen phosphate, diammonium hydrogen phosphate, or phosphorus oxide;
the second metal source comprises at least one of a M¹ source, a M² source, or a M³ source, the M¹ source comprising at least one of oxide of element M¹, hydroxide of element M¹, nitrate of element M¹, oxalate of element M¹, organic alkoxide of element M¹, or carbonate of element M¹; the M² source comprising at least one of oxide of element M², hydroxide of element M², nitrate of element M², oxalate of element M², organic alkoxide of element M², or carbonate of element M²; and the M³ source comprising at least one of oxide of element M³, hydroxide of element M³, nitrate, oxalate of element M³, organic alkoxide of element M³, or carbonate of element M³; and
the second slurry further comprises an R source, the R source comprising at least one of elemental R, acid of element R, or oxide of element R.

12. The method according to claim 9, wherein the third slurry satisfies at least one of the following conditions:
the third lithium source comprises at least one of lithium carbonate or lithium hydroxide;
the titanium source comprises at least one of oxide of element titanium, hydroxide of element titanium, nitrate of element titanium, oxalate of element titanium, organic alkoxide of element titanium, or carbonate of element titanium;
the third phosphorus source comprises at least one of phosphoric acid, metaphosphoric acid, pyrophosphoric acid, ammonium dihydrogen phosphate, diammonium hydrogen phosphate, or phosphorus oxide;
the second carbon source comprises at least one of glucose, sucrose, starch, graphite, carbon nanotubes, or graphene; and
the third slurry further comprises a M⁴ source, the M⁴ source comprising at least one of oxide of element M⁴, hydroxide of element M⁴, nitrate of element M⁴, oxalate of element M⁴, organic alkoxide of element M⁴, or carbonate of element M⁴.

13. The method according to any one of claims 9 to 12, wherein:
a temperature of the first sintering treatment ranges from 600°C to 800°C, and a duration of the first sintering treatment ranges from 6 hours to 12 hours; and/or
a temperature of the second sintering treatment ranges from 700°C to 900°C, and a duration of the second sintering treatment ranges from 8 hours to 12 hours; and/or
a temperature of the third sintering treatment ranges from 300°C to 600°C, and a duration of the third sintering treatment ranges from 6 hours to 12 hours.

14. The method according to any one of claims 9 to 12, wherein:
the first slurry, the second slurry, and the third slurry have each a solid content independently ranging from 10 wt% to 70 wt%; and/or
the first slurry has an average particle size smaller than or equal to 500 nm; and/or
the second slurry has an average particle size smaller than or equal to 200 nm; and/or
the third slurry has an average particle size smaller than or equal to 1 µm; and/or
a solvent of each of the first slurry, the second slurry, and the third slurry independently comprises at least one of water, isopropanol, ethanol, or ethylene glycol.

15. A battery, comprising a positive electrode plate, wherein the positive electrode plate comprises the cathode active material according to any one of claims 1 to 8.
